# NEUE EUROPÄISCHE PATENTSCHRIFT

(11) **EP 0 405 180 B2**
(45) Veröffentlichungstag und Bekanntmachung des Hinweises auf die Entscheidung über den Einspruch: **29.11.1995**
(45) Hinweis auf die Patenterteilung: 10.03.1993
(21) Anmeldenummer: 90110431.5
(22) Anmeldetag: 01.06.1990
(51) Int. Cl.: A01C 17/00

(54) **Zentrifugaldüngerstreuer**
Broadcaster
Epandeur d'engrais

(30) Priorität: 24.06.1989 DE 3920778
(43) Veröffentlichungstag der Anmeldung: 02.01.1991
(73) Patentinhaber: Amazonen-Werke H. Dreyer GmbH & Co. KG, D-49205 Hasbergen (DE)
(72) Erfinder: Dreyer, Heinz, Dipl.-Ing. Dr., D-4507 Hasbergen (DE)
(74) Vertreter: Grünecker, Kinkeldey, Stockmair & Schwanhäusser Anwaltssozietät

(56) Entgegenhaltungen:
- DE-A- 1 557 916
- DE-U- 7 702 017
- DE-U- 8 703 454
- FR-A- 7 000 986
- FR-A- 7 000 987
- FR-B- 1 601 508
- NL-A- 6 717 660
- NL-B- 93 470
- Amazone Prospekt ZA-U 1984
- Amazone Prospekt ZA-U 1985
- Prospekt Eurospand der Firma OMAB, Mod. 480/2-E, 680/2-E, 880/2-E, (Englische Beschreibung)
- Lely Prospekt "Pikant" Kunstdüngerstreuer; (Deutsche Beschreibung)
- Prospekte der Amazonen Werke; - ZA-U 1001, .. 1501, .. 1801; (D518* 5.85 BRD);- ZW-S, ZL-S, ZA-E 400 bis 1002; (D 423(H) 12.74 BRD);- EK 300 bis 400, EK-W 250, EK-S 300 .. 400; (D 491 (H) 3.82 BRD);
- Prospekte Bogballe, BL 600 und C II 1000
- Prospekte Eurospand 680/2-E, 880/2-E, 1080/2-E, sowie Eurospand 433 R, 533 R 733 R der Firma OMAB (Italienische Beschreibung)
- Prospekt der Firma KUHN, Comete 1, .. 330 LS, .. ZS 600 - ZS 1000, .. 350 SU (Französische Beschreibung)
- LELY Industries: - Prospekt Centerliner; - Prospekt Kunstdüngerstreuer Typ H und Typ W, Typen PIKANT, L 1250, L 2000-H, L 2500 und L 4000; - Gebrauchsanleitung Kunstdüngerstreuer Typ X für 3-Punkt Hydraulik;- Handbuch "Landbouwwerktuigen" von L. van Wingerden, Ausgabe 1982, Seiten 4, 76-81
- Prospekt Eurospand der Firma OMAB (Torino 86) Mod. 1280/2-SE, 1780/2-SE (Deutsche und Englische Beschreibung)
- Prospekt Eurospand der Firma OMAB mit Diagramm der Streubreite über relative Streumenge %, ausgegeben auf der EIMA '88 (Italienische Beschreibung)
- Prospekt Eurospand der Firma OMAB der Typen 80/2-E, 80/2-SE (Beschreibung in Italienisch, Englisch und Deutsch) zusammen mit Streudiagrammen der Typen 880/2E und 1280/2SE aus dem Jahre 1985
- Prospekt Eurospand der Firma OMSB der Typen 1280/2-SE, 1780/2-SE und 80/2-SE mit Streudiagramm bei Streubreite von 24 m (Deutsche Beschreibung)

## Beschreibung

Die Erfindung betrifft einen Zentrifugaldüngerstreuer gemäß des Oberbegriffes des Patenanspruches 1.

Durch den Prospekt Eurospand ist ein Zentrifugalstreuer gemäß des Oberbegriffes des Anspruche 1 bekannt.

Ein weiterer Zentrifugaldüngerstreuer ist beispielsweise durch DE-U-7702017 bekannt. Bei diesem Zentrifugaldüngerstreuer sind die Auslauföffnungen jeweils in der inneren schräg nach oben verlaufenden Seitenwand des dachförmigen Mittelteils angeordnet. Die Öffnungsweite der Auslauföffnung wird über vor ihnen angeordneten Schieber eingestellt. Der aus den Auslauföffnungen herausfließende Dünger wird von den unterhalb der Auslauföffnung angeordneten Schleuderscheiben in Breitverteilung auf der Bodenoberfläche verteilt. Die Öffnungsstellung der Schieber ist über Anschläge festlegbar, die an dem dachförmigen Mittelteil auf der Vorderseite des Schleuderdüngerstreuers angeordnet sind. Die Einstellung der Anschläge ist relativ umständlich und schwierig, weil die Anschläge sich in dem unzugänglichen Bereich zwischen dem Zentrifugaldüngerstreuer und dem Schlepper, an dem der Schleuderdüngerstreuer angebaut ist, sich befinden. Hierdurch ist es nicht immer möglich, die Ausbringmenge genau und exakt einzustellen. Desweiteren ist bei diesem Schleuderdüngerstreuer von Nachteil, daß das Streubild bei allen Ausbringmengen nicht gleichmäßig ist, da der Mengeneffekt auftritt. Hierdurch ergibt sich eine Ungleichmäßigkeit des Streubildes, die bei verschieden großen Ausbringmengen unterschiedlich groß ist, weil das Streubild sich verlagert.

Der Erfindung liegt die Aufgabe zugrunde, auf einfache Weise eine genaue Einstellung bei einem gleichmäßigen Streuergebnis bei allen Ausbringmengen zu erreichen.

Diese Aufgabe wird erfindungsgemäß durch die kennzeichnenden Merkmale des Anspruches 1 gelöst.

Infolge dieser Maßnahmen, welche kombinatorisch zusammenwirken, ist es möglich, auf einfachste Weise die Ausbringmenge genau und exakt einzustellen, wobei sichergestellt ist, daß das gleichmäßige Streubild bei allen Einstellungen gleichmäßig ist. Der Dünger wird also in gleichmäßiger Weise beim Ausbringen von allen Dünger sorten und in unterschiedlich großen Ausbringmengen auf der Bodenoberfläche verteilt. Die Anschläge mit Skalen sind an den aufrecht verlaufenden Enden des dachförmigen Mittelteiles angeordnet. Hierdurch sind die Anschläge mit den Skalen auf konstruktiv einfache Weise in einem gut zugänglichen und gut einsehbaren Bereich an dem Schleuderdüngerstreuer angeordnet.

Hierbei ist vorgesehen, daß die Schieber zum Öffnen der Auslauföffnungen im Bereich der Auslauföffnung in Fahrtrichtung bewegt werden. Infolge dieser Maßnahmen wird in besonders einfacher Weise ein äußerst gleichmäßiges Streubild erzielt.

Eine einfache Anordnung der Anschläge und des Schiebers wird dadurch erreicht, daß der Schieber jeweils auf einem Schwenkbolzen schwenkbar gelagert ist, daß auf diesem gleichen Schwenkbolzen ein Anschlaghebel gelagert ist, und daß zur Bestimmung der Öffnungsweite der Auslauföffnung der Schieber oder Teile des Schiebers an dem Anschlaghebel zur Anlage kommen.

Weitere Einzelheiten der Erfindung sind den übrigen Unteransprüchen, der Beispielsbeschreibung und den Zeichnungen zu entnehmen. Hierbei zeigen
Fig. 1 einen erfindungsgemäßen Schleuderdüngerstreuer in der Seitenansicht,
Fig. 2 den Schleuderdüngerstreuer in der Rückansicht,
Fig. 3 die Anordnung des Schiebers, des Anschlaghebels und die Betätigung des Schiebers sowie die Anordnung der Auslauföffnung in der Seitenwand in der Ansicht II - III in vergrößerter Darstellung und in Teilansicht des Schleuderdüngerstreuers,
Fig. 4 die Anordnung des Schiebers, des Anschlaghebels und die Betätigung mittels eines hydraulischen einfachwirkenden Zylinders in gleicher Darstellungsweise wie in Fig. 3,

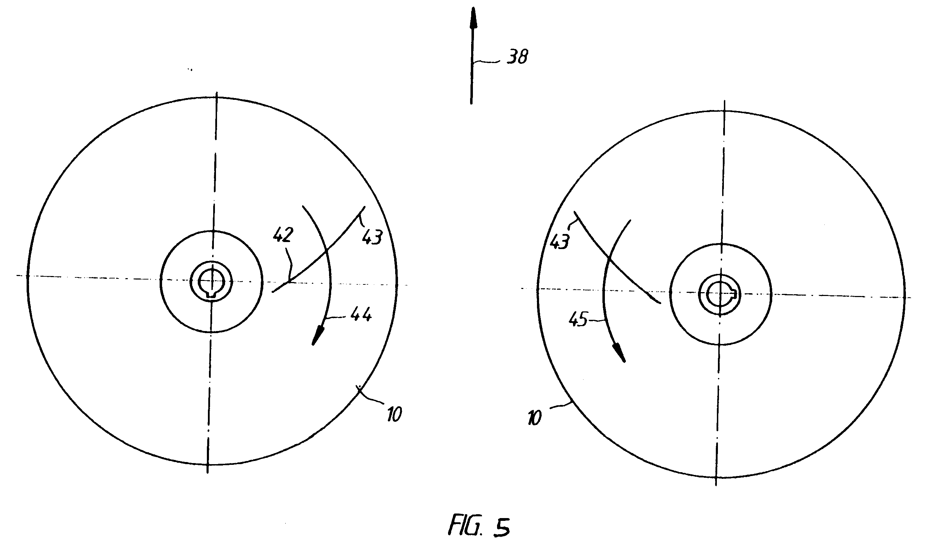

Fig. 5 die Verlagerung des Aufgabeschwerpunktes auf den Schleuderscheiben in Draufsicht und in Prinzipdarstellung.

Der Zentrifugaldüngerstreuer weist den Vorratsbehälter 1 und den Rahmen 2 auf. Am Rahmen 2 sind auf der Vorderseite die Drei-Punkt-Kupplungselemente 3 angeordnet, über welche der Zentrifugaldüngerstreuer an dem Drei-Punkt-Kraftheber eines nicht dargestellten Schleppers anzubauen ist. Der Vorratsbehälter 1 ist in seinem unteren Bereich durch das dachförmige Mittelteil 4 in die beiden Auslauftrichter 5 aufgeteilt. Im unteren Bereich der Seitenwände 6 des dachförmigen Mittelteils 4 sind die Auslauföffnungen 7 angeordnet. Vor den Auslauföffnungen 7 ist jeweils ein Schieber 8 angeordnet, mittels welcher die Öffnungsweite der Auslauföffnungen 7 einzustellen ist. Die Größe der Auslauföffnungen, d. h. die Öffnungstellung der Schieber 8 wird über Anschläge 9, die sich in Verlängerung der Seitenwände befinden, in später noch erläuteter Weise eingestellt.

Unterhalb der Auslauföffnung 5 sind die Schleuderscheiben 10 mit ihren Wurfelementen 11 auf den Getriebeausgangswellen 12 des Getriebes 13, welches am Rahmen 2 befestigt ist, angeordnet. Über das Getriebe 13 werden die Schleuderscheibern 10 im entgegengesetzen Drehsinn zueinander rotierend angetrieben, und zwar in der Weise, daß sie im mittleren Bereich vorne aufeinander zulaufen.

Auf der Rückseite des Zentrifugaldüngerstreuers sind die Anschläge 9 an dem dachförmigen Mittelteil 4 in Verlängerung der Seitenwand 6 der Auslauftrichter an dem Vorratsbehälter 1 angeordnet. Die Anschläge 9 weisen das Verlängerungsstück 30 der Seitenwand 6 auf. In den Verlängerungsstück 30 ist das Langloch 31 angeordnet. Am Ende des Verlängerunsstückes 30 befindet sich die Skala 32. Die Anschläge 9 weisen den Anschlaghebel 33 auf, der um den Schwenkbolzen 34 schwenkbar an der Seitenwand 6 gelagert ist. Auf diesen gleichen Schwenkbolzen 34 ist auch der Schieber 8 schwenkbar gelagert. Der Anschlaghebel 33 ist mittels der Einstellschraube 35, welche durch den Anschlaghebel 33 und das Langloch 31 ragt, stufenlos verstellbar und anhand der Skala 32 in Verbindung mit dem Zeiger 36, welcher an dem Anschlaghebel 33 angebracht ist, einzustellen und über die Einstellschraube 35 an dem Verlängerungsstück 30 festzuklemmen. Der Schieber 8 weist das Anschlagstück 37 auf, welches an dem Anschlaghebel 33 zu Bestimmung der Öffnungsweite der Auslauföffnung 7 zur Anlage kommt. Das Anschlagstück 37 kommt in dem kleinen Abstand A von dem Schwenkbolzen 34 zur Anlage.

Über den in Fahrtrichtung 38 gesehen auf der Vorderseite des Zentrifugaldüngerstreuers schwenkbar um den Schwenkbolzen 39 an dem Rahmen 2 des Zentrifugaldüngerstreuers angeordneten Handhebel 40 und das Verbindungsgestänge 41 läßt sich der Schieber 8 in die Öffnungs- und Schließstellung bringen. Die Öffnungsstellung wird, wie gesagt, durch den Anschlaghebel 33 bestimmt, wenn das Anschlagstück 37 an dem Anschlaghebel 33 zur Anlage kommt.

Die Auslauföffnung 7 und die Anordnung des Schiebers 8 ist derart ausgebildet, daß ausgehend von dem geschlossenen Zustand der Auslauföffnung bei der Vergrößerung der Auslauföffnung 7 durch Verstellung des Schiebers 8 der Aufgabeschwerpunkt 42 des durch die Auslauföffnung 7 hindurchfließenden Düngers auf der Schleuderscheibe 10 auf einer Linie 43 verlagert wird, die über den Öffnungsbereich der Auslauföffnung 7 entgegen der Drehrichtung 44 und 45 der Schleuderscheiben 10 verläuft. Desweiteren verläuft die Linie 43 jeweils bei Vergrößerung der Auslauföffnung von dem Scheibeninneren in Richtung des äußeren Randes der Schleuderscheiben 10. Die Schieber 8 werden zum Öffnen der Auslauföffnung im Bereich der Auslauföffnung 7 jeweils in Fahrtrichtung 38 bewegt. Desweiteren sind die Schleuderscheiben 10 in einander entgegengesetzen Drehsinn 44 und 45 zueinander angetrieben und zwar derart, daß sie im mittleren vorderen Bereich aufeinander zulaufen.

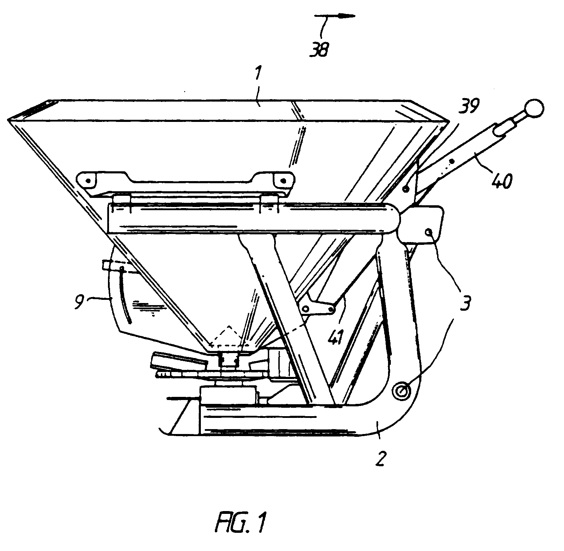

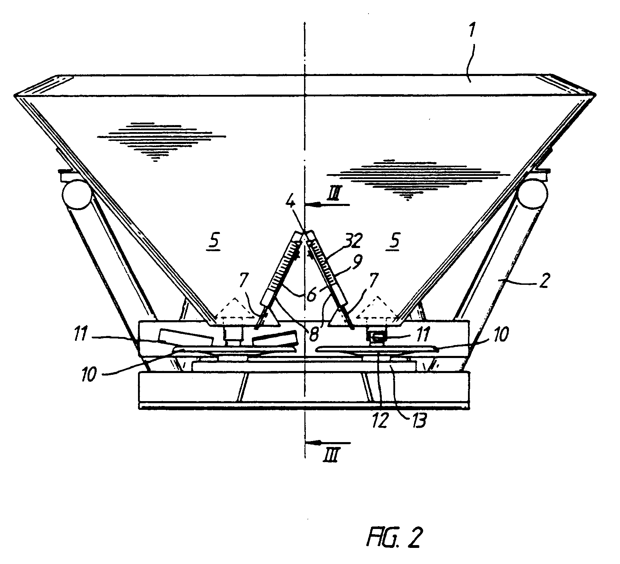

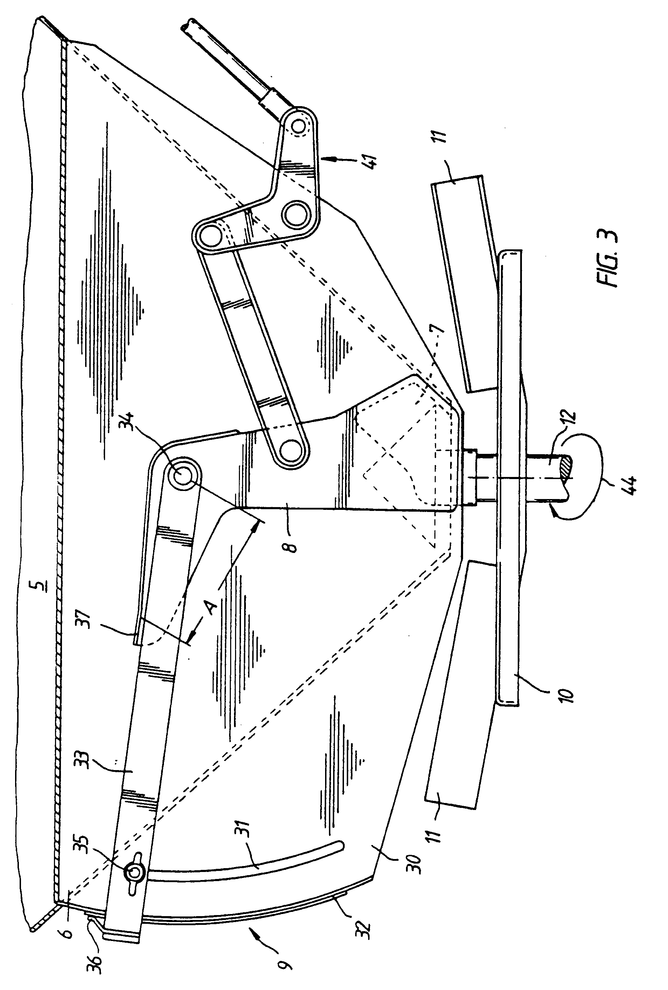

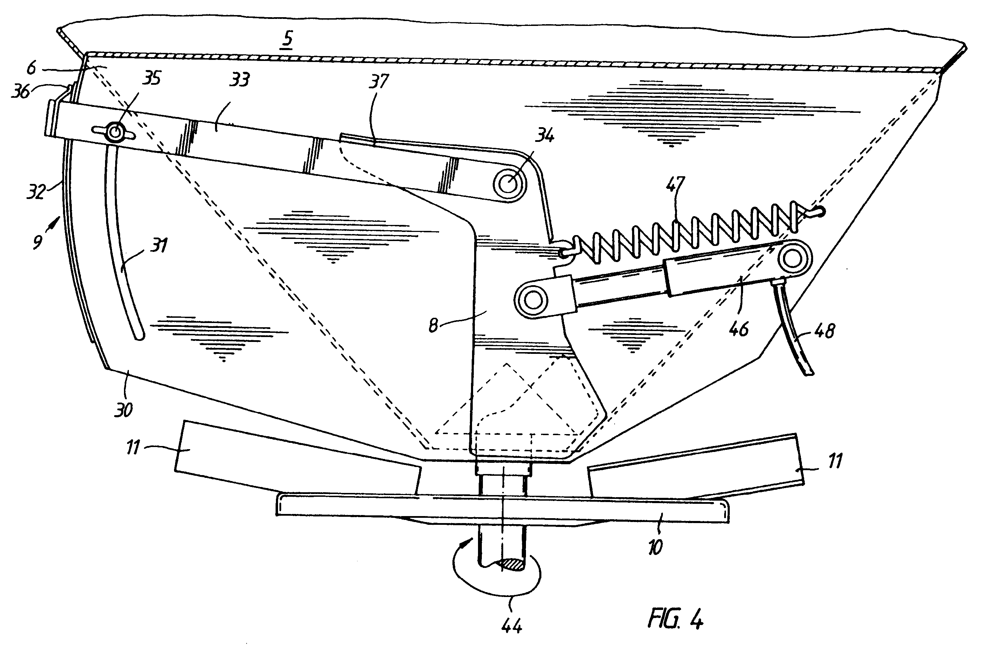

Anstelle der Handhebelbetätigung gemäß den Figuren 1 bis 3 kann die Betätigung für die Schieber 8 auch von einem einfachwirkenden Hydraulikzylinder 46 und einer ihm zugeordneten Feder 47 betätigt werden, wie dies in Fig. 4 gezeigt ist. Hierbei ist die Anordnung so getroffen, daß die Feder 47 den Schieber in Öffnungsstellung zieht, während der Hydraulikzylinder 46 den Schieber 8 in die Schließstellung drückt. Der Hydraulikzylinder 46 ist über den Schlauch 48 an die Hydraulikanlage des den Zentrifugaldüngerstreuers tragenden Schleppers angeschlossen.

## Patentansprüche

1. Zentrifugaldüngerstreuer mit einem Vorratsbehälter,
welcher zwei durch ein dachförmiges Mittelteil getrennte Auslauftrichter aufweist;
wobei die Auslauföffnungen in der inneren schräg nach oben oder aufrecht verlaufenden Seitenwand des dachförmigen Mittelteils jeweils angeordnet sind,
wobei die Öffnungsweiten der Auslauföffnung über vor ihnen angeordnete Schieber einstellbar sind, und die Öffnungsstellungen der Schieber über einzustellende Anschläge festlegbar sind,
wobei unterhalb der Auslauföffnung zwei nebeneinander angeordnete und um aufrechte Achse rotierend angetriebene Schleuderscheiben mit Wurfelementen angeordnet sind,
wobei die Schleuderscheiben im entgegengesetzten Drehsinn zueinander rotieren
und die Anschläge mit Skalen zum Verstellen der Anschläge auf der Rückseite des Zentrifugaldüngerstreuers an dem dachförmigen Mittelteil angeordnet sind,
und wobei die Schleuderscheiben im mittleren vorderen Bereich aufeinander zulaufen,
dadurch gekennzeichnet,
- daß die Auslauföffnungen (7) in Verbindung mit den Schiebern (8) derart ausgebildet sind, daß sich ausgehend von dem geschlossenen Zustand der Auslauföffnung (7) bei Vergrößerung der Auslauföffnung (7) durch Verstellung des Schiebers (8) der Aufgabeschwerpunkt (42) des durch die Auslauföffnung (7) hindurchfließenden Düngers auf der Schleuderscheibe auf einer Linie (43) verlagert wird, die über demganzen Offnungsbereich der Auslauföffnung (7) entgegen der Drehrichtung (44, 45) der Schleuderscheiben (10) nach außen verläuft,
- daß ein Schieber zum Öffnen die Auslauföffnung im Bereich der Auslauföffnung in Fahrtrichtung bewegt werden und
- daß die Skalen an aufrechtverlaufenden Enden von in Fahrtrichtung nach hinten weisender Verlängerungstücken (30) des dachförmigen Mittelteils (4) angeordnet sind.

2. Zentrifugaldüngersteuer nach Anspruch 1, dadurch gekennzeichnet, daß der Schieber (8) jeweils auf einem Schwenkbolzen (34) schwenkbar gelagert ist, daß auf diesem gleichen Schwenkbolzen (34) ein Anschlaghebel (33) gelagert ist, und daß zur Bestimmung der Öffnungsweite der Auslauföffnung (7) der Schieber (8) oder Teile (37) des Schiebers (8) an dem Anschlaghebel (33) zur Anlage kommen.

3. Zentrifugaldüngerstreuer nach Anspruch 1 oder 2, dadurch gekennzeichnet, daß der Schieber (8) jeweils in einem kleinem Abstand (A) von den Schwenkbolzen (34) an dem Anschlaghebel (33) zur Anlage kommt.

4. Zentrifugaldüngerstreuer nach einem oder mehreren der vorstehenden Ansprüche, dadurch gekennzeichnet, daß die Schieber (8) entweder von einem oder mehreren auf der Vorderseite des Zentrifugaldüngerstreuers angeordneten Handheben (40) oder zumindest einem einfach wirkenden Hydraulikzylinder (46) mit ihm zugeordneter Feder (47) betätigt werden.

## Claims

1. Centrifugal fertilizer spreader, including a hopper,
which comprises two discharge funnels separated by a roof-shaped central portion,
the outlet apertures each being disposed in the inner lateral wall of the roof-shaped central portion, said wall extending inclinedly upwardly or vertically,
the widths of opening of the outlet aperture being adjustable via slider members, which are disposed upstream thereof, and the positions of opening of the slider members being securable via stop members which are to be adjusted,
two centrifugal discs being disposed with throwing elements beneath the outlet aperture, said discs being disposed adjacent each other and being driven so as to rotate about vertically extending axes,
the centrifugal discs rotating in opposite directions of rotation to each other,
and the stop members being disposed with graduations for adjusting the stop members on the rear end of the centrifugal fertilizer spreader on the roof-shaped central portion,
and the centrifugal discs extending towards each other in the central, front region,
characterised
- in that the outlet apertures (7) are in association with the slider members (8) so that, from the closed state of the outlet aperture (7) to the enlargement of the outlet aperture (7) by adjustment of the slider member (8), the loading centre of gravity (42) for the fertilizer flowing through the outlet aperture (7) is disposed on the centrifugal disc along a line (43) which extends outwardly over the entire range of opening of the outlet aperture (7) in a direction in opposition to the direction of rotation (44, 45) of the centrifugal discs (10);
- in that the slider members are displaced in the direction of travel in the region of the outlet aperture for the opening of the outlet aperture; and
- in that the graduations are disposed on upwardly extending ends of rearwardly orientated extension-pieces (30), when viewed with respect to the direction of travel, of the roof-shaped central portion (4).

2. Centrifugal fertilizer spreader according to claim 1, chracterised in that each slider member (8) is pivotably mounted on a respective pivot bolt (34), in that a stop lever (33) is mounted on this same pivot bolt (34), and in that the slider member (8) or portions (37) of the slider member (8) abut against the stop lever (33) in order to determine the width of opening of the outlet aperture (7).

3. Centrifugal fertilizer spreader according to claim 1 or 2, characterised in that each slider member (8) abuts against the stop lever (33) with a small spacing (A) from the pivot bolts (34).

4. Centrifugal fertilizer spreader according to one or more of the preceding claims, characterised in that the slider members (8) are actuated either by one or by a plurality of hand levers (40), which are disposed on the front end of the centrifugal fertilizer spreader, or are actuated by at least one single-acting hydraulic cylinder (46) with spring (47) associated therewith.

## Revendications

1. Epandeur centrifuge d'engrais comportant un réservoir d'alimentation à deux trémies de sortie séparées par une partie médiane en forme de toit, les orifices de sortie étant prévus chaque fois dans la paroi latérale remontant en biais à l'intérieur et appartenant à la partie médiane en forme de toit, les degrés d'ouverture des orifices de sortie se réglant à l'aide de tiroirs disposés devant les orifices et les positions d'ouverture des tiroirs se fixant par l'intermédiaire de butées réglables, deux disques d'épandage entraînés en rotation autour d'axes verticaux étant juxtaposés en dessous des orifices de sortie, ces disques comportant des éléments éjecteurs, les disques d'épandage tournant l'un par rapport à l'autre suivant le sens de rotation opposé et les butées et les échelles pour le réglage des butées sont prévues sur la face arrière de l'épandeur centrifuge, sur sa partie médiane en forme de toit, et les disques d'épandage tournent l'un vers l'autre à l'avant, dans leur zone médiane avant, épandeur caractérisé en ce que les orifices de sortie (7) sont conçus en liaison avec les tiroirs (8) pour que, partant de la position de fermeture des orifices de sortie (7), lorsque le degré d'ouverture des orifices de sortie (7) augmente par commande de chaque tiroir (8), le centre de gravité d'impact (42) de l'engrais qui traverse l'orifice de sortie (7) et arrive sur le disque d'épandage, se déplace selon une ligne (43) qui pour toute la zone d'ouverture de l'orifice de sortie (7) se déplace vers l'extérieur dans le sens opposé du sens de rotation (44, 45) des disques d'épandage (10), on déplace les tiroirs pour ouvrir l'orifice de sortie dans la zone de l'orifice de sortie selon le sens de déplacement et les échelles aux extrémités qui se rejoignent d'avant en arrière dans le sens du déplacement, de prolongements (30) de la partie médiane (4) en forme de toit.

2. Epandeur centrifuge d'engrais selon la revendication 1, caractérisé en ce que le tiroir (8) est monté pivotant chaque fois sur un axe (34) portant également un levier de butée (33) et pour déterminer le degré d'ouverture de l'orifice de sortie (7), le tiroir (8) ou les parties (37) du tiroir (8) viennent en butée contre le levier de butée (33).

3. Epandeur centrifuge d'engrais selon l'une des revendications 1 ou 2, caractérisé en ce que le tiroir (8) vient en appui contre le levier de butée (33) chaque fois à une faible distance A de l'axe de pivotement (34).

4. Epandeur centrifuge d'engrais selon une ou plusieurs des revendications précédentes, caractérisé en ce que les tiroirs (8) sont actionnés ou par un, ou par plusieurs leviers (40) prévus sur la face avant de l'épandeur centrifuge ou par au moins un vérin hydraulique (46) à simple effet avec son ressort (47) associé.
